# EUROPEAN PATENT SPECIFICATION

(11) **EP 1 115 798 B1**
(45) Date of publication and mention of the grant of the patent: **10.03.2004**
(21) Application number: 98934707.5
(22) Date of filing: 15.07.1998
(51) Int. Cl.: C09D 5/08, C08K 5/54, C08K 3/36, C09D 183/04

(54) **ONE-PART ORGANOPOLYSILOXANE RUBBER COMPOSITION FOR USE AS A CORROSION PROTECTION COATING ON METALS**
EINKOMPONENTEN-SILOXANGUMMI-ZUSAMMENSETZUNG ZUR VERWENDUNG ALS METALL-KORROSIONSSCHUTZBESCHICHTUNG
COMPOSITION DE CAOUTCHOUC A BASE D'ORGANOPOLYSILOXANE, PRETE A L'EMPLOI ET UTILE EN TANT QUE REVETEMENT ANTICORROSION SUR DES METAUX

(30) Priority: 25.06.1998 CA 2241766
(43) Date of publication of application: 18.07.2001
(73) Proprietor: CSL Silicones Inc., Toronta, Ontario M8Z 1K2 (CA)
(72) Inventor: MISTRY, Balwantrai, Guelph, Ontario N1H 7A4 (CA); BARR, John, Richard, Eden Mills, Ontario N0B 1P0 (CA); HUDA, Seraj, Ul, Toronto, Ontario M8W 1A6 (CA)
(74) Representative: Brooks, Nigel Samuel
(86) International application number: PCT/CA1998/000673
(87) International publication number: WO 1999/067336

(56) References cited:
- EP-A- 0 143 541
- EP-A- 0 340 120
- EP-A- 0 735 101
- US-A- 4 734 479
- US-A- 4 931 491

## Description

### FIELD OF THE INVENTION

This invention relates to a one-part room temperature vulcanizable organopolysiloxane rubber composition which crosslinks in the presence of moisture to form a coating for the corrosion protection of metals.

### BACKGROUND OF THE INVENTION

Metal surfaces exposed to moisture such as rain or fog in combination with contaminated atmospheres as are found in industrial locations may be subject to extensive corrosion unless protected in some way from exposure to the corrosive atmosphere. Other potentially corrosive environments include along sea coasts where salt spray is found and in areas where agricultural chemicals are widely distributed. In addition, metal surfaces directly exposed to water such as marine structures and vessels are also subject to the potential for extensive corrosion. In the past, such metal surfaces have been most commonly protected by being painted with alkyd based paints. Such paints form a relatively rigid coating on the surface of the metal which can become brittle and when subjected to stress, can flake or chip off, thereby exposing the underlying metal to the corrosive elements. In addition, such paints generally are susceptible to UV damage thereby further reducing their effective life.

Two-part organopolysiloxane rubber compositions for use as a corrosion protection coating on metals have been developed. For example, Lampe describes in U.S. Patent No. 4,341,842 a two-part room temperature vulcanizable composition for coating the underside of vehicles to protect the metal from rusting or being corroded by road salts or other similar compounds.
However, such two-part compositions have a major disadvantage in that they require the use of complex dual mixing and spray nozzle apparatus or require pre-mixing and immediate use on site when used with conventional spray equipment. If conventional spray equipment is used, the amount of material pre-mixed must also be exact to prevent wastage as the composition has a finite pot life.

### SUMMARY OF THE INVENTION

In one aspect the present invention provides for a one-part room temperature vulcanizing organopolysiloxane rubber composition for use as a corrosion protection coating on metals. The composition comprises the product which is obtained by mixing the following:
a) about 20 to 50 weight percent of polydimethyl siloxane fluid of the formula

   HO[(CH₃)₂SiO]ₙH

   in which n has an average value such that the viscosity is in the range from 1 to 100 Pa.S at 25°C, preferably from 10 to 20 Pa.S at 25°C;
b) about 20 to 50 weight percent of a mixture of anorphorous and crystalline SiO₂ reinforcing fillers having a surface area of up to 200 m²/g and a specific gravity of 2.2;
c) about 2 to 6 weight percent of an oximino silane;
d) about 0.25 to 2 weight percent of an organo functional silane;
e) about 0.05to 1 weight percent of an organotin salt; and
f) about 10 to 40 weight percent of an organic solvent as a dispersion medium for the above composition.

The present invention also provides for a method of protecting exposed surfaces particularly metal or concrete surfaces from the effects of a corrosive environment. The method comprises applying to the surface a thin layer of the above one-part organopolysiloxane rubber composition and allowing the layer of the one-part organopolysiloxane rubber composition to cure at room temperature to a silicone elastomer.

The present invention also provides for the metal or concrete surfaces coated with the silicone elastomer formed from the curing of the one-part organopolysiloxane rubber composition.

### DETAILED DESCRIPTION OF THE INVENTION

The one-part organopolysiloxane rubber compositions of the present invention are ideally suited for corrosion protection of steel or concrete structures against salt spray and chemical environments including direct exposure to salt water, salt fog and other industrial pollutant. The compositions of the present invention can be used to coat metal surfaces of motor vehicles which may be exposed to high salt condition during the winter season. The compositions of the present invention are particularly useful on marine installations, electric transmission towers and bridges for corrosion protection of steel or concrete structures directly exposed to salt water and industrial pollution, especially sulfur based.

The one-part organopolysiloxane rubber compositions of the present invention for use as a corrosion protective coating on metals contain about 20 to 50 weight percent of polydimethylsiloxane fluid of the formula HO[(CH₃)₂SiO]ₙH in which n has an average value such that the viscosity is in the range from 1 to 100 Pa.S, preferably 10 to 80 Pa.S, most preferably 10 to 50 Pa.S at 25°C.

The composition also contains about 20 to 50 weight percent of a mixture of anorphorous and crystalline SiO₂ reinforcing fillers having a surface area of up to 200 m²/g and preferably a specific gravity of 2.2.

The composition also contains about 2 to 6 weight percent of an oximinosilane cross linking agent.
Preferably the oximinosilane cross linking agent is of the formula RSi(ON=CR'₂)₃ in which R and R' each represent a monovalent hydrocarbon radical such as for example an alkyl radical such as methyl, ethyl, propyl, butyl, or an alkylene radical such as vinyl and allyl. The preferred R and R' are alkyl radicals, most preferably methyl and ethyl radicals.

The composition also contains about 0.25 to 2 weight percent of an organo functional silane. Preferably the organo functional silane has the formula 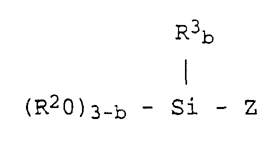 wherein R² and R³ are C₁₋₈ monovalent hydrocarbon radicals, b varies from 0 to 3, preferably 0, Z is a saturated, unsaturated or aromatic hydrocarbon which may be further functionalized by a member selected from the class consisting of amino, ether, epoxy, isocyanate, cyano, acryloxy and acyloxy and combinations thereof.

The C₁₋₈ monovalent hydrocarbon radical of R² and R³ includes an alkyl radical such as, for example, methyl, ethyl, propyl, butyl, or an alkylene radical such as vinyl and allyl. Preferably R² and R³ are alkyl radicals, more preferably methyl, ethyl or propyl radicals.

The saturated, unsaturated or aromatic hydrocarbon of Z includes alkyl, cycloalkyl, alkylene, and aryl groups. Among the alkyl groups are C₁₋₈ straight or branched-chain alkyl such as, for example, methyl, ethyl, propyl, isopropyl, n-butyl, isobutyl, tert-butyl, pentyl, isopentyl, hexyl, etc., the cycloalkyl are C₃₋₈ cycloalkyl such as, for example, cyclopropyl, cyclobutyl, cyclohexyl, etc., the alkylene groups are C₁₋₈ alkylene such as, for example, vinyl, allyl, and the aryl groups include phenyl and napthyl. The above groups may be further functionalized by including in the chain or ring structure, as the case may be, a group selected from the class consisting of amino, ether, epoxy, isocyanate, cyano, acryloxy, acyloxy and combinations. Preferably Z is an alkyl group, more preferably further functionalized by one or more amino group. The most preferred organo-functional silane is N-(2-aminoethyl-3-aminopropyl)trimethoxysilane.

The composition additionally contains about 0.05 to 1 weight percent of an organotin salt. Preferably the organotin salt is selected from the group dibutyltin diacetate, stannous octoate, dibutyltin dioctoate and dibutyltin dilaurate. Most preferably the organotin salt is dibutyltin dilaurate of the formula

(C₄H₉)₂Sn(OCOC₁₀H₂₀CH₃)₂.

The composition also contains about 10 to 40 weight percent of a hydrocarbon solvent to be used as a dispersion medium for the composition. The hydrocarbon solvent is preferably a petroleum based solvent such as naphtha or mineral spirits.

The composition may contain other optional ingredients such as pigments and other fillers in minor amounts provided that the addition of the ingredients does not cause degradation of the corrosion resistance of the cured coating made from the composition. One commonly utilized optional ingredient is a pigment, preferably a grey pigment, most preferably present in amounts up to about 1 weight percent.

The organopolysiloxane composition of the present invention is prepared by mixing the ingredients together in the absence of moisture. The silane is moisture sensitive and will undergo cross-linking in the presence of moisture such that the mixture must be essentially absent of free moisture when the silane is added and maintained in a moisture free state until cure is desired.

A preferred method of mixing comprises mixing the polysiloxane polymer with the reinforcing fillers and other optional fillers and pigments. Thereafter, the oximinosilane and organo-gunctional silane are added and mixed under a nitrogen atmosphere. The solvent is added to the mixture under a nitrogen atmosphere and finally, the organotin salt is added to the mixture. The mixture is then dispensed in the sealed containers for storage prior to use.

The surface of the metal or concrete to be protected is coated with the composition by conventional methods such as dipping, brushing or spraying. Preferably, the metal or concrete to be protected is coated by spraying one or more applications of the composition of the present invention. The coating generally has an average thickness of 0.25 to 1.50 mm, single or more preferably, an average thickness of 0.5 to 1.0 mm, most preferably about 0.5 to 0.75 mm. After the coating is formed on the surface of the metal or concrete, the metal or concrete is exposed to normal atmosphere for cross-linking and cure of the coating.

The improved coating of the present invention is capable of protecting metal and concrete surfaces from corrosion in the presence of moisture such as rain or fog in combination with contaminated atmospheres, salt spray or fog or direct exposure to salt water.

The improved coating of the present invention is particularly useful for protecting metal surfaces which are directly exposed to salt water. Such surfaces include the hulls of ships and other vessels, oil drilling rigs, harbour and pier structures, etc. When the coating is used on the hulls of ships, further benefits such anti-fouling in addition to the corrosion protection are achieved. The coating does not allow marine animals, such as barnacles, to easily attach to the surface. Any such animals which attempt to attach to the surface are generally removed from the surface by high pressure washers. Additionally, clean up of the surface is generally accomplished by high pressure wash and/or hand or mechanical wiping and does not require the scraping operations commonly utilized during hull cleaning of ships, or other marine installations.

The following examples are included to illustrate preferred embodiments of the invention and to demonstrate the usefulness of the coating and are not intended to limit in any way the scope of protection for the invention.

### EXAMPLE 1

To 36 parts of dimethyl polysiloxane fluid having a viscosity of 16.75 Pa.S at 25°C is added 35 parts of a mixture of anorphorous and crystalline silica fillers having a specific gravity of 2.2 and surface area of about 130m²/g. Then 2 parts of pigment is added and the composition is mixed in a mixer to a uniform consistency. Then 3 parts of methyl tris-(methyl ethyl ketoxime) silane and 1 part of N-(2-aminoethyl-3 aminopropyl) trimethoxysilane are added and mixed under a nitrogen atmosphere. Then 22 parts of naphtha solvent is added to the mixture. Finally, 0.1 part of dibutyltin dilaurate is added to the dispersion and mixed until a uniform consistency is achieved.

Coupon samples prepared from stainless and carbon steel and aluminum sheet were coated with the composition prepared according to Example 1 by dipping into the mixture and exposing the samples to normal atmosphere for crosslinking. The coupon samples, having an average coating thickness of 0.3 mm, were exposed to salt-fog testing in an electrical (ozone producing) environment. After 2000 hours of continuous exposure, the coating showed no evidence of deterioration or separation from the virgin metal surfaces. Uncoated samples of both metals showed severe etching and corrosion.

Carbon steel sheet samples were coated with the composition according to Example 1 by dipping into the mixture and exposing the samples to normal atmosphere for crosslinking. The samples, having an average coating thickness of 0.3 mm, were exposed to accelerated heat aging at 260°C. After 7 days of continuous exposure, the coating showed no evidence of deterioration or separation from the virgin metal surface.

Carbon steel coupons coated with the composition of Example 1 to a thickness of 0.5 mm were immersed 30 days in an algae producing environment of ocean water at room temperature. Considerable deposits of algae were present which were easily removed by wiping with a damp cloth. The original surface of the coating showed no changes, scratches or deformations.

The improved flexibility of the coating and its resistance to cracking was confirmed utilizing carbon steel coupons coated with 0.3 mm thick coating. The samples were bent 180° along a curve showed no cracks or separation from substriate.

Compositions of the present invention are also useful for protecting other types of surfaces from corrosive environments. For example, compositions of the present invention are particularly useful for protecting surfaces for spillage containment around tank farms and the like. The composition may be coated onto a heavy-duty fabric which is then utilized to line the interior of the spillage catch basins around the tank farm. Samples of heavy-duty geo fabric were sprayed with the composition of the present invention to coat the fabric. Treated and untreated samples of fabric were exposed to caustic soda solution, diesel oil, furnace oil by placing samples of these materials on the surface of the fabric for up to seven days. No deterioration of the treated fabric was observed and the deposits of the material were easily able to be cleaned up without any noticeable loss of weight of the material. In contrast, untreated fabric did not retain the material on the surface and the caustic soda solution caused deterioration of the untreated fabric material within 24 hours.

While the invention has been described in reference to specific embodiments it should be understood by those skilled in the art that various changes can be made and equivalents may be substituted without departing from the true spirit and scope of the invention. All such modifications are intended to be within the scope of the claims appended hereto.

## Claims

1. A one-part organopolysiloxane rubber composition for use as a corrosion protection coating on metals comprising the product which is obtained by mixing the following:
a) about 20 to 50 weight percent of polydimethyl siloxane fluid of the formula
HO [(CH₃)₂SiO]ₙH
in which n has an average value such that the viscosity is in the range from 1 to 100 Pa.S at 25°C, preferably from 10 to 20 Pa.S at 25°C;
b) about 20 to 50 weight percent of a mixture of amorphorous and crystalline SiO₂ reinforcing fillers, the amorphorous filler having a surface area of up to 200 m²/g and a specific gravity of 2.2;
c) about 2 to 6 weight percent of an oximinosilane;
d) about 0.25 to 2 weight percent of an organo-functional silane of the formula 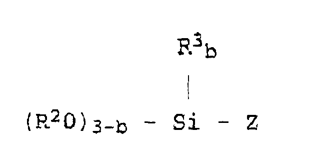 wherein R² and R³ are C₁₋₈ monovalent hydrocarbon radicals, b varies from 0 to 3, preferably 0, Z is a saturated, unsaturated or aromatic hydrocarbon which is functionalized by one or more members selected from the class consisting of amino, ether, epoxy, isocyanate, cyano, acryloxy and acyloxy and combinations thereof;
e) about 0.05 to 1 weight percent of an organotin salt; and
f) about 10 to 40 weight percent of an organic solvent as a dispersion medium for the above composition.

2. A composition according to claim 1 wherein the oximinosilane is a compound of the formula
RaSi(ON=CR'₂)₄₋ₐ
wherein R and R' represent a group of monovalent hydrocarbon radicals and the integer a has a value 1,

3. A composition according to claim 2 wherein R and R' are independently selected from the group consisting of alkyl and alkylene.

4. A composition according to claim 2 wherein R and R' are each alkyl.

5. A composition according to claim 2 wherein R and R' are independently selected from the group consisting of methyl, ethyl, propyl, butyl, vinyl and allyl.

6. A composition according to claim 4 wherein R and R' are independently selected from the group consisting of methyl and ethyl.

7. A composition according to claim 1 wherein the organo functional silane is a compound of the formula 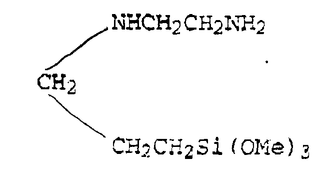 wherein Me is the methyl radical.

8. A composition according to claim 1 wherein the organotin salt is an organotin salt of a carboxylic acid selected from the group consisting of dibutyltindiacetate, stannous octoate and dibutyltin dioctoate.

9. A composition according to claim 8 wherein the organotin salt of a carboxylic acid is a compound of the formula
(C₄H₉)₂Sn(OCOC₁₀H₂₀CH₃)₂.

10. A composition according to claim 1 comprising:
a) about 35 weight percent of a hydroxyl terminated dimethyl polysiloxane fluid having a viscosity of 10 Pa.S at 25°C;
b) about 35 weight percent of a mixture of amorphorous and crystalline SiO₂ fillers, the amorphorous filler having a specific gravity of 2.2 and surface area of up to about 130m²/g;
c) about 4.3 weight percent of methyl tris-(methyl ethyl ketoxime)silane;
d) about 2.2. weight percent of N-(2 aminoethyl-3 aminopropyl)trimethoxysilane;
e) about 0.8 weight percent of dibutyltindilaurate;
f) about 22 weight percent of petroleum based solvent; and
g) about 0.8 weight percent of a grey pigment.

11. A method of protecting a surface from the effects of a corrosive atmospheric environment comprising
(1) applying to the surface a thin layer of a one-part organopolysiloxane rubber composition comprising the product which is obtained by mixing the following:
a) about 20 to 50 weight percent of polydimethyl siloxane fluid of the formula
HO[(CH₃)₂SiO]ₙH
in which n has an average value such that the viscosity is in the range from 1 to 100 Pa.S at 25°C, preferably from 10 to 20 Pa.S at 25°C,
b) about 20 to 50 weight percent of a combination of amorphorous and crystalline SiO₂ reinforcing fillers, the amorphorous filler having a surface area of up to 200 m²/g and a specific gravity of 2.2;
c) about 2 to 6 weight percent of an oximinosilane;
d) about 0.25 to 2 weight percent of an organo functional silane of the formula 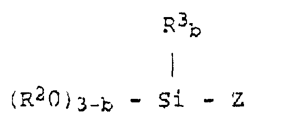 wherein R² and R³ are C₁₋₈ monovalent hydrocarbon radicals, b varies from 0 to 3, preferably 0, Z is a saturated, unsaturated or aromatic hydrocarbon which is functionalized by one or more members selected from the class consisting of amino, ether, epoxy, isocyanate, cyano, acryloxy and acyloxy;
e) about 0.05 to 1 weight percent of an organtin salt; and
f) about 10 to 40 weight percent of an organic solvent as a dispersion medium for the above composition.
and
(2) allowing the layer of the one-part organopolysiloxane rubber composition to cure at room temperature to a silicone elastomer.

12. A method according to claim 11 wherein the one part organopolysiloxane rubber composition comprises:
a) about 35 weight percent of a hydroxyl terminated dimethyl polysiloxane fluid having a viscosity of 10 Pa.S at 25°C;
b) about 35 weight percent of a mixture of amorphorous and crystalline SiO₂ fillers, the amorphorous filler having a specific gravity of 2.2 and surface area of up to about 130m²/g;
c) about 4.3 weight percent of methyl tris-(methyl ethyl ketoxime)silane;
d) about 2.2. weight percent of N-(2 aminoethyl-3 aminopropyl)trimethoxysilane;
e) about 0.8 weight percent of dibutyltindilaurate;
f) about 22 weight percent of petroleum based solvent; and
g) about 0.8 weight percent of a grey pigment.

13. A method according to Claims 11 or 12 wherein the surface to be protected is a metal or concrete surface exposed to a corrosive salt water environment.

## Patentansprüche

1. Eine aus einer Komponente bestehende Zubereitung von Organopolysiloxan-Gummi zum Gebrauch als gegen Korrosion schützende Beschichtung, enthaltend das Produkt, welches durch Mischung der folgenden Komponenten entsteht:
a) ungefähr 20 bis 50 Gewichtsprozent flüssiges Polydimethylsiloxan der Formel
HO[(CH₃)₂SiO]ₙH
wobei für n ein durchschnittlicher Wert so gewählt wird, dass die Viskosität bei 25°C zwischen 1 und 100 Pa s liegt, vorzugsweise zwischen 10 und 20 Pa s;
b) ungefähr 20 bis 50 Gewichtsprozent einer Mischung von amorphem und kristallinem SiO₂ als verstärkendes Füllmaterial, wobei das amorphe Füllmaterial eine Oberfläche von bis zu 200 m²/g sowie eine spezifische Wichte von 2,2 aufweist;
c) ungefähr 2 bis 6 Gewichtsprozent Oximinosilan,
d) ungefähr 0,25 bis 2 Gewichtsprozent eines organischen funktionalisierten Silans der Formel 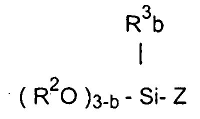 wobei R² und R³ C₁₋₈-monovalente Kohlenwasserstoffreste sind, b von 0 bis 3 variieren kann und vorzugsweise 0 ist, Z ein gesättigter, ungesättigter oder aromatischer Kohlenwasserstoff ist, welcher durch ein oder mehrere Elemente der Menge an Funktionalitäten bestehend aus Amino, Ether, Epoxy, Isocyanat, Acryloxy und Acyloxy sowie Kombinationen derselben funktionalisiert ist;
e) ungefähr 0,05 bis 1 Gewichtsprozent eines Organozinnsalzes; und
f) ungefähr 10 bis 40 Gewichtsprozent eines organischen Lösungsmittels als Dispersionsmittel für die obige Zubereitung.

2. Eine Zubereitung gemäß Anspruch 1, wobei das Oximinosilan eine Verbindung der Formel
RₐSi(ON=CR'₂)₄₋ₐ
ist und R sowie R' eine Gruppe monovalenter Kohlenwasserstoffreste darstellen und die ganze Zahl a einen Wert von 1 hat.

3. Eine Zubereitung gemäß Anspruch 2, wobei R und R' unabhängig voneinander aus der Gruppe bestehend aus Alkylen und Alkylenen gewählt werden.

4. Eine Zubereitung gemäß Anspruch 2, wobei R und R' beides Alkyle sind.

5. Eine Zubereitung gemäß Anspruch 2, wobei R und R' unabhängig voneinander aus der Gruppe bestehend aus Methyl, Ethyl, Propyl, Butyl, Vinyl und Allyl gewählt werden.

6. Eine Zubereitung gemäß Anspruch 4, wobei R und R' unabhängig voneinander aus der Gruppe bestehend aus Methyl und Ethyl gewählt werden.

7. Eine Zubereitung gemäß Anspruch 1, wobei das organisch funktionalisierte Silan eine Verbindung der Formel 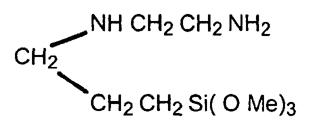 ist, wobei Me der Methylrest ist.

8. Eine Zubereitung gemäß Anspruch 1, wobei das Organozinnsalz ein Organozinnsalz einer Carboxylsäure ist, welches aus der Gruppe Dibutylzinndiacetat, Zinnoctoat und Dibutylzinn Dioctoat ausgewählt wurde.

9. Eine Zubereitung gemäß Anspruch 8, wobei das Organozinnsalz einer Carboxylsäure eine Verbindung der Formel
(C₄H₉)₂ Sn (OCOC₁₀H₂₀CH₃)₂
ist.

10. Eine Zubereitung gemäß Anspruch 1, enthaltend:
a) ungefähr 35 Gewichtsprozent eines flüssigen, mit Hydroxylterminus versehenen Dimethylpolysiloxans mit einer Viskosität von 10 Pa s bei 25°C,
b) ungefähr 35 Gewichtsprozent einer Mischung von amorphem und kristallinem SiO₂ als Füllmaterial, wobei das amorphe Füllmaterial eine spezifische Dichte von 2,2 g/ml sowie eine Oberfläche von ungefähr 130 m²/g aufweist;
c) ungefähr 4,3 Gewichtsprozent Methyl-tris-(methyl-ethyl-ketoxim)-silan,
d) ungefähr 2,2 Gewichtsprozent N-(2-aminoethyl-3-aminopropyl)-trimethoxisilan;
e) ungefähr 0,8 Gewichtsprozent Dibutlyzinndilaurat;
f) ungefähr 22 Gewichtsprozent eines Lösungsmittels auf Petroleumbasis und
g) ungefähr 0,8 Gewichtsprozent eines grauen Pigments.

11. Ein Verfahren zum Schutz einer Oberfläche vor den Auswirkungen einer korrodierenden atmosphärischen Umwelt, bestehend daraus dass:
(1) auf die Oberfläche eine dünne Schicht einer aus einer Komponente bestehender Zubereitung von Organopolysiloxan-Gummi aufgebracht wird, welche das Produk enthält, das man durch Mischung der folgenden Komponenten erhält:
a) ungefähr 20 bis 50 Gewichtsprozent flüssiges Polydimethylsiloxan der Forme
HO[(CH₃)₂SiO]ₙH
wobei für n ein durchschnittlicher Wert so gewählt wird, dass die Viskosität be 25°C zwischen 1 und 100 Pa s liegt, vorzugsweise zwischen 10 und 20 Pa s;
b) ungefähr 20 bis 50 Gewichtsprozent einer Mischung von amorphem und kristallinem SiO₂ als verstärkendem Füllmaterial, wobei das amorphe Füllmaterial eine Oberfläche von bis zu 200 m²/g sowie eine spezifische Wichte von 2,2 aufweist;
c) ungefähr 2 bis 6 Gewichtsprozent Oximinosilan,
d) ungefähr 0,25 bis 2 Gewichtsprozent eines organischen funktionalisierten Silans der Formel 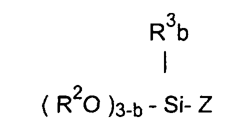 wobei R² und R³ C₁₋₈-monovalente Kohlenwasserstoffreste sind, b von 0 bis 3 variieren kann und vorzugsweise 0 ist, Z ein gesättigter, ungesättigter oder aromatischer Kohlenwasserstoff ist, welcher durch ein oder mehrere Elemente der Menge an Funktionalitäten bestehend aus Amino, Ether, Epoxy, Isocyanat, Acryloxy und Acyloxy sowie Kombinationen derselben funktionalisiert ist;
e) ungefähr 0,05 bis 1 Gewichtsprozent eines Organozinnsalzes; und
f) ungefähr 10 bis 40 Gewichtsprozent eines organischen Lösungsmittels als Dispersionsmittel für die obige Zubereitung.
und
(2) der Schicht einer aus einer Komponente bestehenden Zubereitung von Organopolysiloxan-Gummi bei Raumtemperatur zu einem Silikon-Elastomer auszuhärten erlaubt wird.

12. Ein Verfahren gemäß Anspruch 11, wobei die aus einer Komponente bestehende Zubereitung von Organopolysiloxan-Gummi enthält:
a) ungefähr 35 Gewichtsprozent eines flüssigen, mit Hydroxylterminus versehenen Dimethylpolysiloxans mit einer Viskosität von 10 Pa s bei 25°C,
b) ungefähr 35 Gewichtsprozent einer Mischung von amorphem und kristallinem SiO₂ als Füllmaterial, wobei das amorphe Füllmaterial eine spezifische Wichte von 2,2 sowie eine Oberfläche von ungefähr 130 m²/g aufweist;
c) ungefähr 4,3 Gewichtsprozent Methyl-tris-(methyl-ethyl-ketoxim)-silan,
d) ungefähr 2,2 Gewichtsprozent N-(2-aminoethyl-3-aminopropyl)-trimethoxysilan;
e) ungefähr 0,8 Gewichtsprozent Dibutlyzinndilaurat;
f) ungefähr 22 Gewichtsprozent eines Lösungsmittels auf Petroleumbasis und
g) ungefähr 0,8 Gewichtsprozent eines grauen Pigments.

13. Ein Verfahren gemäß den Ansprüchen 11 und 12, wobei die zu schützende Oberfläche eine Metalloberfläche oder eine Betonoberfläche ist, welche einer korrosiven, Salzwasser enthaltenden Umwelt ausgesetzt ist.

## Revendications

1. Composition de caoutchouc d'organopolysiloxane à un composant pour une utilisation comme revêtement de protection contre la corrosion sur des métaux comprenant le produit qui est obtenu en mélangeant les composés suivants ;
a) d'environ 20 à 50 % en poids d'un fluide de polydiméthylsiloxane de formule :
HO[(CH₃)₂SiO]ₙH
dans laquelle n a une valeur moyenne de sorte que la viscosité soit comprise dans la plage allant de 1 à 100 Pa.S à 25°C, de préférence allant de 10 à 20 Pa.S à 25°C ;
b) d'environ 20 à 50 % en poids d'un mélange de charges renforçantes SiO₂ amorphes et cristallines, la charge amorphe ayant une surface d'au plus 200 m²/g et une gravité spécifique de 2,2 ;
c) d'environ 2 à 6 % en poids d'un oximinosilane ;
d) d'environ 0,25 à 2 % en poids d'un silane organofonctionnel de formule : 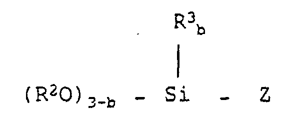 dans laquelle R² et R³ représentent des radicaux hydrocarbures monovalents en C₁-C₆, b varie de 0 à 3, de préférence représente 0, Z représente un radical hydrocarbure saturé, insaturé ou aromatique qui est fonctionnalisé par un ou plusieurs éléments choisis dans la classe constituée de l'amino, l'éther, l'époxy, l'isocyanate, le cyano, l'acryloxy et l'acyloxy et des combinaisons de ceux-ci ;
e) d'environ 0,05 à 1 % en poids d'un sel d'organoétain ; et
f) d'environ 10 à 40 % en poids d'un solvant organique comme milieu de dispersion pour la composition ci-dessus.

2. Composition selon la revendication 1, dans laquelle l'cximinosilane est un composé de formule :
RaSi(ON=CR'₂)₄₋ₐ
dans laquelle R et R' représentent un groupe de radicaux hydrocarbures monovalents et le nombre entier a la valeur 1.

3. Composition selon la revendication 2, dans laquelle R et R' sont indépendamment choisis dans le groupe comprenant le radical alkyle et le radical alkylène.

4. Composition selon la revendication 2, dans laquelle R et R' sont chacun un radical alkyle.

5. Composition selon la revendication 2, dans laquelle R et R' sont indépendamment choisis dans le groupe constitué du méthyle, de l'éthyle, du propyle, du butyle, du vinyle et de l'allyle.

6. Composition selon la revendication 4, dans laquelle R et R' sont indépendamment choisis dans le groupe constitué du méthyle et de l'éthyle.

7. Composition selon la revendication 1, dans laquelle le silane organofonctionnel est un composé de formule : 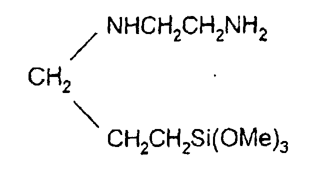 dans laquelle Me représente le radical méthyle.

8. Composition selon la revendication 1, dans laquelle le sel d'organoétain est un sel d'organoétain d'un acide carboxylique choisi dans le groupe constitué du dibutylétaindiacétate, de l'octoate stanneux et du dioctoate de dibutylétain.

9. Composition selon la revendication 8, dans laquelle le sel d'organoétain d'un acide carboxylique est un composé de formule :
(C₄H₉)₂Sn(OCOC₁₀H₂₀CH₃)₂.

10. Composition selon la revendication 1 comprenant :
a) environ 35 % en poids d'un fluide de polysiloxane de diméthyle se terminant par un radical hydroxyle ayant une viscosité de 10 Pa.S à 25°C ;
b) environ 35 % en poids d'un mélange de charges renforçantes SiO₂ amorphes et cristallines, la charge amorphe ayant une gravité spécifique de 2,2 et une surface d'au plus environ 130 m²/g ;
c) environ 4,3 % en poids de tris -(méthyléthylcétoxime)silane de méthyle ;
d) environ 2,2 % en poids de N-(2-aminoéthyl-3-aminopropyl)triméthoxysilane ;
e) environ 0,8 % en poids de dibutylétaindilaurate ;
f) environ 22 % en poids d'un solvant à base de pétrole ; et
g) environ 0,8 % en poids d'un pigment gris.

11. Méthode de protection d'une surface des effets d'un environnement atmosphérique corrosif comprenant les étapes consistant à :
(1) appliquer à la surface une couche fine d'une composition de caoutchouc d'organopolysiloxane à un composant comprenant le produit qui est obtenu en mélangeant les composés suivants :
a) d'environ 20 à 50 % en poids d'un fluide de polydiméthylsiloxane de formule :
HO[(CH₃)₂SiO]ₙH
dans laquelle n a une valeur moyenne de sorte que la viscosité soit comprise dans la plage allant de 1 à 100 Pa.S à 25°C, de préférence allant de 10 à 20 Pa.S à 25°C ;
b) d'environ 20 à 50 % en poids d'un mélange de charges renforçantes SiO₂ amorphes et cristallines, la charge amorphe ayant une surface d'au plus 200 m²/g et une gravité spécifique de 2,2 ;
c) d'environ 2 à 6 % en poids d'un oximinosilane ;
d) d'environ 0,25 à 2 % en poids d'un silane organofonctionnel de formule : 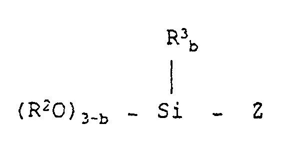 dans laquelle R² et R³ représentent des radicaux hydrocarbures monovalents en C₁-C₈, b varie de 0 à 3, est de préférence 0, Z représente un radical hydrocarbure saturé, insaturé ou aromatique qui est fonctionnalisé par un ou plusieurs éléments choisis dans la classe constitué de l'amino, de l'éther, de l'époxy, de l'isocyanate, du cyano, de l'acryloxy et de l'acyloxy et des combinaisons de ceux-ci ;
e) d'environ 0,05 à 1 % en poids d'un sel d'organoétain ; et
f) d'environ 10 à 40 % en poids d'un solvant organique comme milieu de dispersion pour la composition ci-dessus,
et
(2) laisser la couche de la composition de caoutchouc d'organopolysiloxane à un composant durcir à température ambiante en un élastomère de silicone.

12. Méthode selon la revendication 11, dans laquelle la composition de caoutchouc d'organopolysiloxane à un composant comprend ;
a) environ 35 % en poids d'un fluide de polysiloxane de diméthyle se terminant par un radical hydroxyle ayant une viscosité de 10 Pa.S à 25°C ;
b) environ 35 % en poids d'un mélange de charges renforçantes SiO₂ amorphes et cristallines, la charge amorphe ayant une gravité spécifique de 2,2 et une surface d'au plus environ 130 m²/g ;
c) environ 4,3 % en poids de tris-(méthyléthylcétoxime)silane de méthyle ;
d) environ 2,2 % en poids de N-(2-aminoéthyl-3-aminopropyl)triméthoxysilane ;
e) environ 0,8 % en poids de dibutylétaindilaurate ;
f) environ 22 % en poids d'un solvant à base de pétrole ; et
g) environ 0,8 % en poids d'un pigment gris.

13. Méthode selon la revendication 11 ou 12, dans laquelle la surface à protéger est un métal ou une surface en béton exposé(e) à un environnement d'eau salée corrosif.
